# EUROPEAN PATENT APPLICATION

(11) **EP 4 461 391 A1**
(43) Date of publication of application: **13.11.2024**
(21) Application number: 24175297.1
(22) Date of filing: 10.05.2024
(51) Int. Cl.: A63F 13/285, A63F 13/54, G06F 3/01, G06F 3/16, H04N 21/439

(54) **METHOD FOR GENERATING HAPTIC FEEDBACK**

(30) Priority: 11.05.2023 GB 202307006
(71) Applicant: Sony Interactive Entertainment Europe Limited, London W1F 7LP (GB)
(72) Inventor: PANESAR, Pritpal Singh, London, W1F 7LP (GB); RYAN, Nicholas Anthony Edward, London, W1F 7LP (GB)
(74) Representative: Gill Jennings & Every LLP

(57) **Abstract**

A computer-implemented method for generating haptic feedback to accompany an audio signal, the method comprising: detecting a predetermined audio signal in one or more monitored audio channels (11); and in response to detecting the predetermined audio signal, triggering a haptic feedback signal in a haptic feedback channel (42), wherein the haptic feedback channel is synchronized with the one or more monitored audio channels.

## Description

### FIELD OF THE INVENTION

The following disclosure relates to methods for generating feedback in a multimedia entertainment system, such as a home cinema or a gaming system. Computer programs, systems and devices implementing the methods are also described.

### BACKGROUND

Feedback in a multimedia entertainment system can be used to enhance a multimedia entertainment experience, for example by providing haptic feedback via a game controller, where the haptic feedback is synchronized to an event occurring in a game.

For example, the PlayStation 5 DualSense^{®} controller is capable of providing feedback and stimulation to the player in the following ways:
- Haptic feedback and resistive triggers - allowing players to experience vibration, simulations of texture and sensations of resistance or pressure.
- Visual feedback - DualSense (and prior to this DualShock 4) controllers have a light source capable of changing colour depending on the game being played. For instance, in one game, the DualShock 4 light flashed red and blue simulating police lights when a character was being chased by police.
- Audio feedback - DualSense (and prior to this DualShock 4) have speakers capable of mirroring in game sound, or creating sound that uniquely emits from the controller to enhance immersion. For instance, in another game, the DualSense speaker emits the sound of hail hitting metal to enhance the audio that is being simultaneously created by the game and emitted from the TV speaker.

However, in known implementations, the feedback has to be programmed as part of a game. For example, the game can be programmed to trigger feedback in relation to a specific gameplay action, or at a specific time in a linear cut scene.

Accordingly, it is desirable to provide a more flexible way of incorporating feedback into a multimedia experience provided by a multimedia entertainment system having one or more peripheral devices.

### SUMMARY OF INVENTION

According to a first aspect, the present invention provides a method for generating haptic feedback to accompany an audio signal, the method comprising: detecting a predetermined audio signal in one or more monitored audio channels; and in response to detecting the predetermined audio signal, triggering a haptic feedback signal in a haptic feedback channel, wherein the haptic feedback channel is synchronized with the one or more monitored audio channels.

In older media, such as games produced before the current full range of feedback was available, the feedback is not programmed as part of the media. The method of the first aspect provides a way of adding feedback for such media, by using an existing audio signal of the media. Similarly, in newer media, the method of the first aspect avoids or reduces the need to program feedback.

Additionally, in some cases, media is generated by an application-specific processing system, such as an older game console. In such cases, the method of the first aspect enables adding feedback downstream of the application-specific processing system, as an alternative to accessing or modifying the application-specific processing system. This can, for example, be implemented using a feedback device connected to an audio output of the application-specific processing system.

Similarly, in some cases, media is generated by an emulator emulating an application-specific processing system. In such cases, the method of the first aspect enables adding feedback without accessing or modifying the emulator.

The claimed features can also improve accessibility. For example, haptic outputs may provide an alternative way to perceive audio elements of the media.

Optionally, the method further comprises, before detecting the predetermined audio signal: obtaining one or more audio sample signals from the one or more monitored audio channels; for each of the one or more audio sample signals: evaluating the audio sample signal to determine whether or not to trigger haptic feedback in response to subsequently detecting the same audio sample signal in the one or more monitored audio channels; and upon determining to trigger haptic feedback, storing a haptic feedback record comprising a representation of the audio sample signal. In other words, the method may comprise an initial configuration process in which triggers for haptic feedback are identified.

Optionally, the representation of the audio sample signal comprises a duration, an audio fingerprint and/or metadata encoded with the audio sample signal in the one or more monitored audio channels. The metadata may comprise a looping control flag and/or a memory location. These can be used to define a range of possible predetermined audio signals to trigger haptic feedback, including predetermined audio signals that are at least partly abstracted from a playable audio signal.

Optionally, evaluating the audio sample signal to determine whether or not to trigger haptic feedback comprises at least one of: determining a duration of the audio sample signal; identifying an audio channel in which the audio sample signal was obtained; identifying a media source that generated the audio sample signal; and/or detecting the audio sample signal multiple times, and determining an occurrence frequency of the audio sample signal.

Optionally, evaluating the one or more audio sample signals comprises applying machine learning to obtain a general model for determining whether or not to trigger haptic feedback in response to detecting an audio sample signal.

Optionally, the haptic feedback signal comprises an audio signal. In other words, the haptic feedback is not limited to vibrations, and may generally include any output from a peripheral device to enhance immersion.

Optionally, the method comprises determining the haptic feedback signal based on the predetermined audio signal. For example, determining the haptic feedback signal may comprise selecting the haptic feedback signal from a plurality of predetermined haptic feedback signals based on the predetermined audio signal.

Furthermore, detecting the predetermined audio signal may comprise detecting the predetermined audio signal with any of a range of amplitudes, durations and/or occurrence frequencies; and the method may further comprise adjusting a characteristic of the haptic feedback signal based on the amplitude, duration and/or occurrence frequency of the predetermined audio signal.

Optionally, the method may comprise obtaining haptic feedback capability information from a device configured to receive the haptic feedback channel; and triggering the haptic feedback signal based on the haptic feedback capability information. This enables the method to adapt to support different haptic feedback devices and/or different numbers of haptic feedback devices.

The method may further be extended to trigger feedback based on a visual signal.

For example, according to a second aspect, there is provided a method of generating audio-visual media with feedback, the method comprising: generating base audio-visual media comprising an audio signal and a video signal; and performing a method according to any preceding claim to generate haptic feedback to accompany the base audio-visual media.

In implementations of the method of the second aspect, the method may optionally comprise detecting a predetermined video signal in one or more monitored video channels; and in response to detecting the predetermined video signal, triggering a haptic feedback signal in a haptic feedback channel, wherein the haptic feedback channel is synchronized with the one or more monitored video channels. This may be implemented similarly to the first aspect, based on characteristics of the predetermined video signal rather than (or in addition to) the predetermined audio signal.

According to a third aspect, there is provided a device configured to perform a method according to the first or second aspect. The device may be a standalone device configured to receive audio signals and output haptic feedback signals. Alternatively, the device may be a composite device such as a game console or television, including hardware and/or software modules configured to perform a method according to the first or second aspect.

According to a fourth aspect, there is provided a non-transitory storage medium comprising instructions which, when executed by a computer, cause the computer to perform a method according to the first or second aspect.

According to a fifth aspect, there is provided a computer-readable signal comprising instructions which, when executed by a computer, cause the computer to perform a method according to the first or second aspect.

According to a sixth aspect, there is provided a computer program comprising instructions which, when executed by a computer, cause the computer to perform a method according to the first or second aspect.

According to a further aspect, the application provides a computer-implemented method for generating haptic feedback to accompany a video signal, the method comprising: detecting a predetermined video signal in one or more monitored video channels; and in response to detecting the predetermined video signal, triggering a haptic feedback signal in a haptic feedback channel, wherein the haptic feedback channel is synchronized with the one or more monitored video channels.

### BRIEF DESCRIPTION OF DRAWINGS

Fig. 1A is a schematic block diagram of a multimedia entertainment system in which a method according to the invention may be implemented, including a haptic feedback device;
Fig. 1B is a schematic diagram of the haptic feedback device;
Fig. 2 is a flow chart schematically illustrating steps of a method according to the invention;
Fig. 3 is a flow chart schematically illustrating steps of an implementation of the method;
Fig. 4 schematically illustrates a database of haptic feedback records;
Fig. 5 is a schematic block diagram of a multimedia entertainment system additionally including video monitoring.

### DETAILED DESCRIPTION

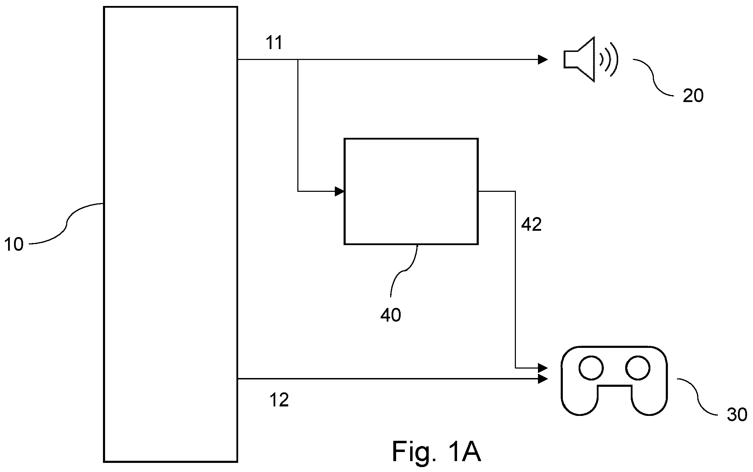

Fig. 1A is a schematic diagram of a multimedia entertainment system according to an embodiment.

As shown in Fig. 1A, the multimedia entertainment system comprises a media source 10, an audio output 20, and a haptic feedback device 30.

The media source 10 is a device configured to provide media comprising an audio signal 11. For example, the media source may be a game console or a television. All or part of the media may be originally generated elsewhere. In that case, the media is relayed by the media source 10, for example by receiving a streaming signal. The media source 10 may also be configured to generate a native haptic feedback signal 12.

The audio output 20 may, for example, be a standalone speaker, a headset, or a television speaker.

The haptic feedback device 30 may, for example, be a peripheral device such as a handheld controller, a companion touchscreen interface, an audio headset or audiovisual headset (e.g. VR or AR headsets), a mobile phone, a wearable device, an external speaker or soundbar, or a peripheral lighting element. The multimedia entertainment system may comprise multiple haptic feedback devices, such as one controller per player of a game.

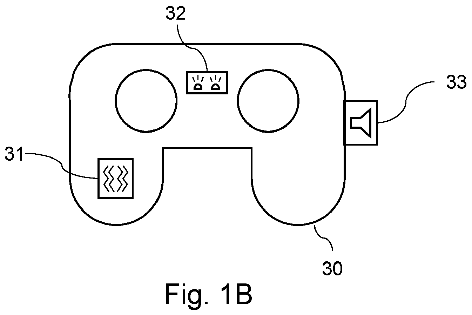

The haptic feedback device 30 is configured to receive one or more haptic feedback signals 12, 42. In this application, a haptic feedback signal indicates one or more sensory outputs to be provided from the haptic feedback device 30 to enhance the experience of the media. Here, "feedback" is not limited to a response to a user, and the haptic feedback may simply be scripted or triggered to occur alongside media. Referring to Fig. 1B, the haptic feedback signal 12, 42 may, for example, include a signal for controlling a vibration element 31 mounted on the haptic feedback device 30, resistive or motorised triggers, visual feedback such as control of an LED display 32 mounted on the haptic feedback device 30, and/or audio feedback such as control of a speaker 33 mounted on the haptic feedback device 30. The feedback 12, 42 can also be output through multiple different peripherals, each implementing one or more of the types of sensory output exemplified above. As mentioned above, such sensory outputs have previously been used to increase immersion in a game. However, similar "feedback" can be provided to accompany and enhance more linear media such as films. The feedback is determined based on a feature in the output stream, such that the feedback is related to the main content output by the main audiovisual display. Furthermore, a mixture of different sensory outputs can be combined in dependence on the output main content and delivered to the user through one or more peripheral devices. For example, a feedback signal comprising a mixture of haptics, light effects (through LEDs and the like) and audio can be generated in dependence on the main content and can be output through one or more peripheral devices. The peripheral device(s) can be in immediate vicinity of the user, located remotely from the user or (in the case of multiple such devices) spread across a wide area to provide an enhanced immersive experience. In the case that multiple peripheral devices are used, each peripheral device can comprise a means for wired or wireless communication with each other. In one example, one or more of the multiple peripheral devices comprises a transceiver unit configured to receive an output feedback signal and distribute separate signals to at least one other of the multiple peripheral devices.

The system further comprises a haptic feedback generator 40. The haptic feedback generator receives the audio signal 11 from the media source 10 and generates a haptic feedback signal 42 which is provided to the haptic feedback device 30.

In embodiments where the media source 10 itself generates a native haptic feedback signal 12, the haptic feedback signal 42 may be provided to the haptic feedback device 30 via a separate haptic feedback channel from the native haptic feedback signal 12, or may be merged into a haptic feedback channel of the native haptic feedback signal 12. For example, the haptic feedback generator 40 may be configured to receive the native haptic feedback signal 12 and add further haptic feedback to the native haptic feedback signal 12.

Different haptic feedback devices 30 will have different haptic feedback capabilities. For example, some haptic feedback devices may only have a vibration element 31. The haptic feedback generator 40 may in some embodiments be configured to check the capabilities of any connected haptic feedback devices 30, in order to avoid triggering a haptic feedback signal which cannot be realised by the haptic feedback devices 30. In other words, the haptic feedback generator 40 may obtain haptic feedback capability information from a device configured to receive the haptic feedback channel and trigger the haptic feedback signal based on the haptic feedback capability information.

The media source 10, audio output 20, the haptic feedback device 30 and the haptic feedback generator 40 may be combined together. For example, a television may comprise the media source 10 and the audio output 20, or a VR headset may comprise the audio output 20 and the haptic feedback device 30. The system may also be implemented in a distributed network, such as a cloud streaming or cloud gaming service. In such distributed systems, the haptic feedback generator 40 may be local to the haptic feedback device 30 or remote from the haptic feedback device 30.

In one preferred example, a game console comprises an emulator for an older game console, the emulator functioning as the media source 10, and also comprises the haptic feedback generator 40. In this example, the game console can provide a "modern" experience with haptic feedback for an older game running in the emulator.

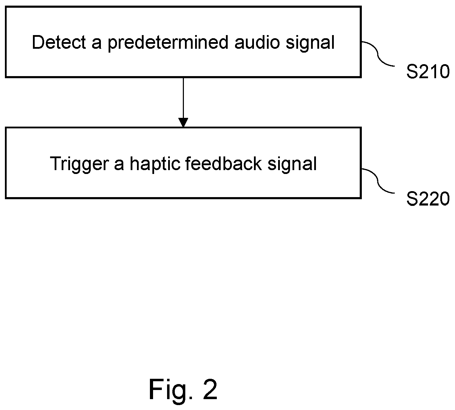

Fig. 2 is a flow chart schematically illustrating steps of a method according to the invention. This method may be implemented by the haptic feedback generator 40 of Fig. 1A.

At step S210, while monitoring the audio signal 11, a predetermined audio signal is detected.

The audio signal 11 may comprise a plurality of channels. For example, the audio signal 11 may comprise one or more sound effect channels and one or more other channels (e.g. a background music channel, a voice channel). In such cases, it may be preferable to add haptic feedback based on the sound effect channel(s) but not based on the other channels. When it is not necessary to add haptic feedback based on a particular channel, it is preferable that the haptic feedback generator 40 saves processing resources by not monitoring the particular channel.

The monitored audio channels may be media-specific.

For example, the haptic feedback generator 40 may obtain metadata about each channel of the audio signal 11, or metadata about the media comprising the audio signal 11, and select one or more channels to monitor based on the metadata.

Alternatively, the haptic feedback generator 40 may determine whether or not to monitor a channel by initially monitoring the channel and assessing the content of the channel. For example, a sound effect channel is likely to contain short, discontinuous sounds, whereas a background music channel is likely to include longer sounds. The haptic feedback generator 40 may categorise each audio channel based on characteristics of the audio channel during the initial monitoring, and then select channels to continue monitoring based on the categorisation.

As an example, in the original PlayStation^{®} (i.e. PS1) architecture, a sound processing unit was designed to process 24 sound channels to produce a combined audio output. Whilst the complete specifics of gaming system architectures (such as the PS1) will not be described herein in detail, such specifics are well documented and discussions on the structures of gaming system architectures are publicly available elsewhere. When the media source 10 is an emulated PlayStation, the haptic feedback generator 40 can be configured to monitor one or more of the channels within the (emulated) sound processing unit, in an implementation of step S210. For a given PS1 game, the developer typically chose some channels to reserve for sound effects and other channels to reserve for other purposes (e.g. background music, dialogue). These developer selections can be reverse-engineered by the haptic feedback generator 40 categorising each audio channel based on characteristics of the audio channel during initial monitoring, as mentioned above.

The predetermined audio signal may alternatively be an audio instruction that does not directly contain playable audio. For example, the predetermined audio signal may comprise a memory location where the playable audio is stored. In the PS1 architecture, the sound processing unit has dedicated DRAM in which audio samples may be stored, and the sound processing unit is configured to receive instructions to read locations in the DRAM in order to generate audio. As another alternative, the predetermined audio signal may comprise an API call for an audio software module. In other words, if the haptic feedback generator 40 is sufficiently integrated with the media source 10, audio need not be monitored at the level of a playable output and audio can be monitored at any level of abstraction within the media source 10.

The predetermined audio signal (i.e. the specific signal which is detected in step S210 while monitoring one or more audio channels) may be matched to an audio fingerprint. The fingerprint may be defined by one or more frequencies, amplitudes, durations, sequences and so on.

In a simple example, the predetermined audio signal is any signal having a duration of less than a predetermined value (e.g. one second). The duration of a detected signal may be determined based on detecting a beginning of the signal after a first period of silence and an end of the signal before a second period of silence in the one or more audio channels. Alternatively, the length of the detected signal may be explicitly defined in the one or more audio channels. For example, the audio channel may comprise data in a sample format including a duration field. Additionally or alternatively, the sample format may include a loop indicator indicating if (and optionally how many times) to repeat accompanying audio data of the sample. For example, referring again to the PS1 example, the sound processing unit handles data in 16 byte chunks, of which the first 2 bytes are flags indicating if a sound should end, continue or loop.

The audio fingerprint of the predetermined audio signal may additionally or alternatively comprise a hash of audio data. In this case, monitoring one or more audio channels comprises obtaining audio data from the one or more audio channels, computing a hash of the obtained audio data, and comparing the hashes of the obtained audio data and the predetermined audio signal to detect when they match.

There may be one or more predetermined audio signals, any of which can be detected, and the steps of the method may be performed for each instance of one of the predetermined audio signals in the one or more monitored audio channels.

At step S220, in response to detecting the predetermined audio signal, a haptic feedback signal is triggered in a haptic feedback channel. The haptic feedback channel is synchronized with the one or more monitored audio channels.

The haptic feedback channel is any signalling channel for controlling a haptic feedback device 30. The system may have multiple haptic feedback channels each of which can be controlled by the haptic feedback generator 40. For example, referring to Fig. 1B, a separate haptic feedback channel may be provided for each of the vibration element 31, the LED display 32 and the speaker 33. In some cases, multiple haptic feedback signals may be triggered in respective haptic feedback channels, in response to detecting the predetermined audio signal.

Similarly, the haptic feedback signal is a signal for controlling a haptic feedback device 30 to provide a specific haptic feedback.

Here, "triggered" simply means that the haptic feedback signal is added to the haptic feedback channel in response to a trigger (i.e. detection of the predetermined audio signal). The haptic feedback signal may be generated in response to the predetermined audio signal, or the haptic feedback signal may be generated, selected or otherwise predetermined before the predetermined audio signal is detected.

In one example, the haptic feedback signal comprises or is derived from the predetermined audio signal. For example, an audio signal corresponding to an impulse sound effect may be fed to a vibration element 31 to provide a haptic rumble that is synchronized with the sound effect.

In another example, the haptic feedback signal is a predetermined haptic feedback signal that is associated with the predetermined audio signal. The predetermined haptic feedback signal may, for example, be one of a bank of haptic feedback signals, such as a range of vibration responses, or a range of light patterns or sequences.

The haptic feedback signal may be adjusted based on characteristics of the predetermined audio signal. For example, the predetermined audio signal may have a range of possible amplitudes and/or possible durations, and the haptic feedback signal may be adjusted based on an actual amplitude and/or an actual duration of the detected predetermined audio signal. Similarly, the haptic feedback generator 40 may be configured to track a number of occurrences or an occurrence frequency of the predetermined audio signal in the audio signal 11, and the haptic feedback signal may be adjusted based on the number or frequency of occurrences. The number or frequency of occurrences may be tracked within a limited time period, e.g. as a moving average frequency.

The haptic feedback generator 40 may store one or more haptic feedback records, wherein each record comprises a predetermined haptic feedback signal and an associated predetermined audio signal. If there are multiple haptic feedback records, then the haptic feedback generator 40 may look up the relevant haptic feedback signal that corresponds to a detected predetermined audio signal, and then trigger the corresponding haptic feedback signal.

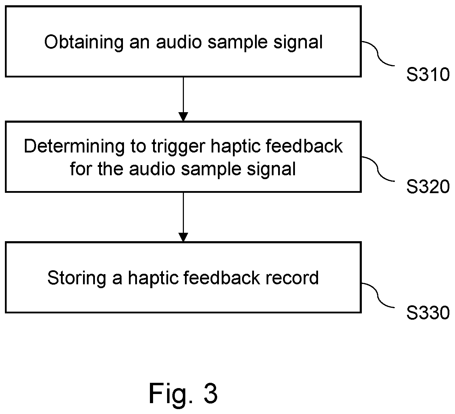

Fig. 3 schematically illustrates a method for automatically creating a haptic feedback record. The method may be performed one or more times to provide haptic feedback records at the haptic feedback generator 40. Additionally or alternatively, haptic feedback records may be created manually.

Referring to Fig. 3, at step S310, the haptic feedback generator 40 obtains an audio sample signal. The audio sample signal may, for example, be obtained from the audio signal 11. Alternatively, the audio sample signal used in step S310 may simply be training data supplied to the haptic feedback generator 40. The steps of Fig. 3 may be repeated by the haptic feedback generator 40 for each of a plurality of audio sample signals.

At step S320, the haptic feedback generator 40 evaluates the audio sample signal to determine whether or not to trigger feedback in response to future detection of the same audio sample signal.

For example, the haptic feedback generator 40 may be programmed with specific criteria for audio sample signals that merit feedback. These criteria may include one or more of audio frequencies, amplitudes, durations, sequences, occurrence frequencies and so on, and may be defined using range or threshold parameters. Additionally, when the audio signal 11 comprises channels, the criteria may include an audio channel in which the audio sample signal was obtained.

Furthermore, where the audio signal 11 comprises metadata such as a loop indicator for the audio sample signal, an identity of the media source 10, or a function of an audio channel, these may be used as criteria for determining whether or not to trigger feedback. The identity of the media source 10 may refer to a specific software media source within a device. For example, when a device is running an emulator, the emulator may be identified as the media source 10. Additionally or alternatively, the identity of the media source 10 may refer to specific media. For example, the identity of the media source 10 may be a specific game or film. In such cases, haptic feedback may be triggered differently for different games or films, or may be triggered only for media output from an emulator.

In other embodiments, where the audio signal 11 does not include an identity of the media source 10, source-specific feedback may nevertheless be provided by storing one or more separate instances of the haptic feedback generator 40. Each instance of the haptic feedback generator may have its own respective configuration of when to trigger feedback and/or which feedback to trigger. When using a specific media source 10, the specific media source 10 may be manually identified by a user, and the user may select a corresponding instance of the haptic feedback generator 40 to use. Alternatively, the specific media source 10 may be automatically identified by the multimedia entertainment system, and the system may select the corresponding instance of the haptic feedback generator 40 to use. As a further alternative, a single haptic feedback generator 40 may be stored with multiple sets of configuration data (e.g. multiple configuration files), where each set of configuration data corresponds to a respective media source 10, and a set of configuration data is selected based on the user or system identifying the media source 10.

Alternatively, the haptic feedback generator 40 may be trained to identify audio sample signals that merit feedback using machine learning. For example, during a learning phase, the haptic feedback generator 40 may receive a yes/no feedback instruction with each audio sample signal, and the haptic feedback generator 40 may learn to predict the feedback instruction based on the audio sample signal. This learning may be based on specific types of criteria such as those discussed above.

Additionally, after determining that an audio sample signal merits feedback, the haptic feedback generator 40 may determine specific feedback to be triggered in response to the audio sample signal.

For example, the specific feedback may comprise or may be derived from the audio sample signal. For example, an audio sample signal corresponding to an impulse sound effect may be fed to a vibration element 31 to provide a haptic rumble that is synchronized with the sound effect.

In another example, the haptic feedback generator 40 may select the specific feedback from a bank of haptic feedback signals, such as a range of vibration responses, or a range of light patterns or sequences. The specific feedback may be selected based on any of the criteria of the audio sample signal. For example, the specific feedback may be selected such that its duration is similar to a duration of the audio sample signal, or such that its amplitude is correlated to an amplitude of the audio sample signal.

The haptic feedback generator 40 may be trained to determine specific feedback in a similar process to that described above for the yes/no feedback instruction. More specifically, during a learning phase, the haptic feedback generator 40 may receive a specific feedback instruction with each audio sample signal, and the haptic feedback generator 40 may learn to predict the feedback instruction based on the audio sample signal. This learning may be based on specific types of criteria such as those discussed above.

The steps of determining whether to trigger feedback and determining specific feedback may be merged. For example, a single machine learning process may be used to train the haptic feedback generator 40 to predict any specific feedback based on the audio sample signal, where one possible outcome is that no feedback is merited.

If it is determined at step S320 that feedback should be triggered in response to the audio sample signal, then the method continues with step S330. Otherwise, the method ends with respect to that audio sample signal.

At step S330, the haptic feedback generator 40 stores a haptic feedback record comprising a representation of the audio sample signal and comprising specific feedback to be triggered upon subsequently detecting the same audio sample signal. More specifically, the haptic feedback generator 40 has an internal memory or has access to an external memory which can store haptic feedback records. For example, the haptic feedback record may be added to a database of haptic feedback records.

In the haptic feedback record, the representation of the audio sample signal may include thresholds or ranges, as discussed above, to support triggering feedback in response to detecting a range of possible predetermined audio signals.

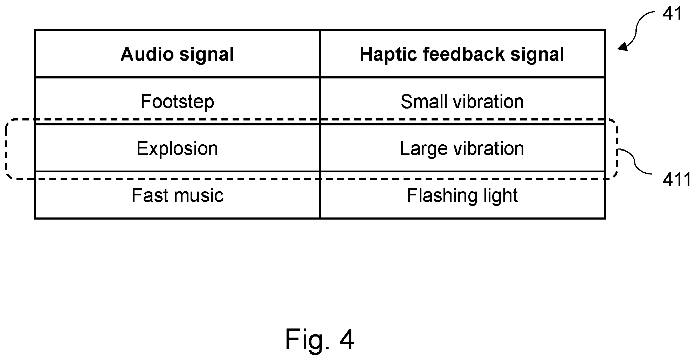

For example, referring to Fig. 4, the haptic feedback generator may store a database 41 of haptic feedback records. The haptic feedback record 411 stored at step S330 may represent the audio sample signal using a fingerprint corresponding to a certain type of sound, such as a footstep or explosion, and/or using characteristics such as a tempo (where the audio sample signal is music), or any of the other characteristics described throughout the application. Additionally, the haptic feedback record 411 may include the specific feedback to be triggered, such as a vibration feedback or a visual feedback. The specific feedback may also include details such as amplitude (small or large vibration) or frequency (e.g. a light flashing frequency matching a music tempo), or any of the other haptic feedback properties described throughout the application.

As previously mentioned, the haptic feedback record may then be used subsequently when step S220 is performed in response to detecting a predetermined audio signal, in order to trigger a specific feedback associated with the predetermined audio signal.

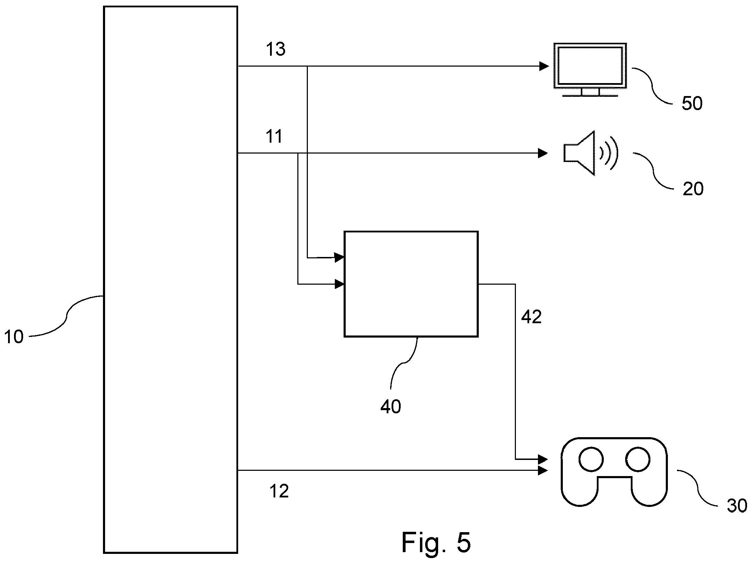

In the above described embodiments, haptic feedback is triggered in response to detecting a predetermined audio signal. However, this concept can be extended to other signals output from a media source 10. For example, Fig. 5 illustrates an embodiment in which a haptic feedback generator 40 is configured to receive a video signal 13.

The system of Fig. 5 is similar to the system of Fig. 1A but additionally comprises a video output 50 such as a television or a VR headset. The video output 50 is configured to receive the video signal 13 from the media source 10 and display corresponding video.

In many embodiments, the video signal 13 is synchronized with the audio signal 11 (and any native haptic feedback signal 12). For example, the video signal 13 may contain a visual component of multimedia such as a video game or film.

Like the audio signal 11, the video signal 13 may comprise a plurality of channels. For example, the video signal 13 may comprise one or more visual effect channels and one or more other channels (e.g. a displayed scene channel). This is especially true in the case of 3D video outputs, which are often communicated as layers or point clouds. Examples of predetermined video signals which may suitably trigger haptic feedback include a shaking screen event (which could be detected based on motion vectors for a sequence of video frames), a sudden change in brightness (such as an explosion), or information contained in HUD elements of a game (e.g. a low health bar, a decreasing ammunition counter). When the video signal 13 comprises multiple channels, it may be preferable to add haptic feedback based on the visual effect channel(s) but not based on the other channels. When it is not necessary to add haptic feedback based on a particular channel, it is preferable that the haptic feedback generator 40 saves processing resources by not monitoring the particular channel.

Where the haptic feedback generator 40 is configured to receive the video signal 13, it may perform a method similar to Fig. 2 or Fig. 3 based on the video signal 13. For example, the haptic feedback generator 40 may detect a predetermined video signal in one or more monitored video channels and, in response to detecting the predetermined video signal, trigger a haptic feedback signal in a haptic feedback channel, wherein the haptic feedback channel is synchronized with the one or more monitored video channels. In some cases, the haptic feedback generator 40 may be configured to receive the video signal 13 without receiving the audio signal 11, and may trigger haptic feedback without processing an audio signal 11.

In the systems shown in Figs. 1A and 5, the haptic feedback generator 40 is a data processing apparatus which implements the described methods using software and/or hardware. In some embodiments, the haptic feedback generator 40 may be stored or distributed in the form of software instructions. For example, the haptic feedback generator may be provided as software for a game console that supports haptic feedback devices 30.

## Claims

1. A computer-implemented method for generating haptic feedback to accompany an audio signal, the method comprising:
detecting a predetermined audio signal in one or more monitored audio channels; and
in response to detecting the predetermined audio signal, triggering a haptic feedback signal in a haptic feedback channel, wherein the haptic feedback channel is synchronized with the one or more monitored audio channels.

2. A method according to claim 1, further comprising, before detecting the predetermined audio signal:
obtaining one or more audio sample signals from the one or more monitored audio channels;
for each of the one or more audio sample signals:
evaluating the audio sample signal to determine whether or not to trigger haptic feedback in response to subsequently detecting the same audio sample signal in the one or more monitored audio channels; and
upon determining to trigger haptic feedback, storing a haptic feedback record comprising a representation of the audio sample signal.

3. A method according to claim 2, wherein the representation of the audio sample signal comprises a duration.

4. A method according to claim 2 or claim 3, wherein the representation of the audio sample signal comprises an audio fingerprint.

5. A method according to any of claims 2 to 4, wherein the representation of the audio sample signal comprises metadata encoded with the audio sample signal in the one or more monitored audio channels.

6. A method according to claim 5, wherein the metadata comprises one or both of: a looping control flag and a memory location.

7. A method according to any of claims 2 to 6, wherein evaluating the audio sample signal to determine whether or not to trigger haptic feedback comprises at least one of:
determining a duration of the audio sample signal;
identifying an audio channel in which the audio sample signal was obtained;
identifying a media source that generated the audio sample signal; and/or
detecting the audio sample signal multiple times, and determining an occurrence frequency of the audio sample signal.

8. A method according to any of claims 2 to 7, wherein evaluating the one or more audio sample signals comprises applying machine learning to obtain a general model for determining whether or not to trigger haptic feedback in response to detecting an audio sample signal.

9. A method according to any preceding claim, further comprising determining the haptic feedback signal based on the predetermined audio signal.

10. A method according to claim 9, wherein determining the haptic feedback signal comprises selecting the haptic feedback signal from a plurality of predetermined haptic feedback signals based on the predetermined audio signal.

11. A method according to any preceding claim, wherein:
detecting the predetermined audio signal comprises detecting the predetermined audio signal with any of a range of amplitudes, durations and/or occurrence frequencies; and
the method further comprises adjusting a characteristic of the haptic feedback signal based on the amplitude, duration and/or occurrence frequency of the predetermined audio signal.

12. A method according to any preceding claim, further comprising:
obtaining haptic feedback capability information from a device configured to receive the haptic feedback channel; and
triggering the haptic feedback signal based on the haptic feedback capability information.

13. A method of generating audio-visual media with feedback, the method comprising:
generating base audio-visual media comprising an audio signal and a video signal; and
performing a method according to any preceding claim to generate haptic feedback to accompany the base audio-visual media.

14. A method according to claim 13, further comprising:
detecting a predetermined video signal in one or more monitored video channels; and
in response to detecting the predetermined video signal, triggering a haptic feedback signal in a haptic feedback channel, wherein the haptic feedback channel is synchronized with the one or more monitored video channels.

15. A computer-readable storage medium comprising instructions which, when executed by a computer, cause the computer to perform a method according to any of claims 1 to 14.
